(19) Europäisches Patentamt
European Patent Office
Office européen des brevets

(11) Veröffentlichungsnummer: **0 402 729 B1**

# (12) EUROPÄISCHE PATENTSCHRIFT

(45) Veröffentlichungstag der Patentschrift: **01.03.95**

(51) Int. Cl.$^{6}$: **C08G 64/14**

(21) Anmeldenummer: **90110545.2**

(22) Anmeldetag: **02.06.90**

## (54) Polycarbonate mit vinylaromatischen Endgruppen.

(30) Priorität: **15.06.89 DE 3919553**

(43) Veröffentlichungstag der Anmeldung:
**19.12.90 Patentblatt 90/51**

(45) Bekanntmachung des Hinweises auf die Patenterteilung:
**01.03.95 Patentblatt 95/09**

(84) Benannte Vertragsstaaten:
**DE ES FR GB IT NL**

(56) Entgegenhaltungen:
**EP-A- 0 348 744**

**DIE MAKROMOLEKULARE CHEMIE: Macromolecular Chemistry and Physics, Band 190, Nr. 3, März 1989, Seiten 487-493, Basel, CH; R.P. OUIRK et al.: "Anionic synthesis of chain-end functionalized polymers using 1,1-diphenylehtylene derivatives. Preparation of 4-hydroxyphenyl-terminated polystyrenes"**

(73) Patentinhaber: **BAYER AG**

**D-51368 Leverkusen (DE)**

(72) Erfinder: **Westeppe, Uwe, Dr.**
**Vogelskamp 72**
**D-4020 Mettmann (DE)**
Erfinder: **Leitz, Edgar, Dr.**
**Goethestrasse 63**
**D-4047 Dormagen 1 (DE)**
Erfinder: **Berg, Klaus, D. Dr.**
**Hansastrasse 124**
**D-4150 Krefeld 1 (DE)**
Erfinder: **Bottenbruch, Ludwig, Dr.**
**Wöhlerstrasse 5**
**D-4150 Krefeld 1 (DE)**
Erfinder: **Ott, Karl-Heinz, Dr.**
**Paul-Klee-Strasse 54**
**D-5090 Leverkusen 1 (DE)**
Erfinder: **Grigo, Ulrich, Dr.**
**Michelsheide 9**
**D-4152 Kempen 3 (DE)**

**EP 0 402 729 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der nach veröffentlichten EP-A-348 744 (=DE-A-38 21 745) sind Trialkylsilyloxydiphenylethylene und damit hergestellte Polymere. Die Polymeren können eine oder zwei aromatisch gebundene OH-Gruppen oder aromatisch gebundene Trialkylsilylether-Gruppen enthalten.

Einzelheiten sind dem nachfolgend aufgeführten Text der EP-A-348 744, der in den vorliegenden Beschreibung bis einschließlich der Spaltung des Silylethers 2.2 reicht, zu entnehmen:
Die Erfindung der EP-A-348 744 betrifft Trialkylsilyloxy-1,1-diphenylethylene der allgemeinen Formel (I) und damit hergestellte neue Polymere mit Aryl-trialkyl-silyl-ether- oder phenolischen Hydroxyl-Endgruppen und ein Verfahren zur Herstellung dieser Polymeren durch anionische Polymerisation.

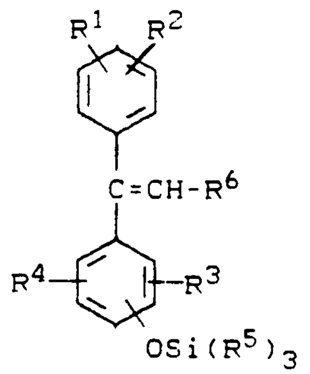

(I)

worin

| | |
|---|---|
| $R^1$, $R^2$ | = H, $C_1$-$C_4$-Alkyl, $OCH_3$ |
| $R^3$ | = H, $C_1$-$C_4$-Alkyl, O-$C_1$-$C_4$-Alkyl, |
| $R^4$ | = H, $C_1$-$C_4$-Alkyl, |
| $R^5$ | = $C_1$-$C_4$-Alkyl und |
| $R^6$ | = $C_1$-$C_4$-Alkyl ist. |

Die DE-A-37 25 848 beschreibt die Herstellung von polymeren Dihydroxyverbindungen durch anionische Polymerisation geeigneter Verbindungen, gegebenenfalls Verminderung der Reaktivität des Polyanions durch 1,1-Diphenylethylen, Umsetzung mit 2,5-Dimethoxybenzylbromid und Entfernung der Schutzgruppe durch anschließende Etherspaltung mit Trimethyliodsilan, Trimethylchlorsilan und Natriumiodid oder Säuren.

Die Verbindungen eignen sich als Stabilisatoren für Polymere, insbesondere solchen mit ungesättigten Bindungen in der Polymerkette, gegen thermischen, strahleninduzierten und oxidativen Abbau.

Die Umsetzung von sogenannten "lebenden" Polymeren (wie Polystyryllithium) mit weitere funktionelle Gruppen enthaltenden Halogenverbindungen, liefert funktionelle Polymere, ist aber begleitet von einer Anzahl an Nebenreaktionen (vgl. J. Polym. Sci. A 3, 4131 (1965); Polymer 17, 1020 (1976); J. Polym. Sci. B 14, 471 (1976; Adv. Polym. Sci. 56, 72 (1984)).

Die Ausbeute an funktionellem Polymer ist daher oftmals nicht befriedigend. Für technische Zwecke ist diese Reaktion daher nicht geeignet.

Gegenstand der Erfindung der EP-A-348 744 sind Trialkylsilyloxy-1,1-diphenylethylene der Formel (I), daraus hergestellte Polymere mit Aryltrialkylsilylether-Endgruppen oder phenolischen Hydroxyl-Endgruppen der Formeln (II) und (III) sowie entsprechende Herstellungsverfahren.

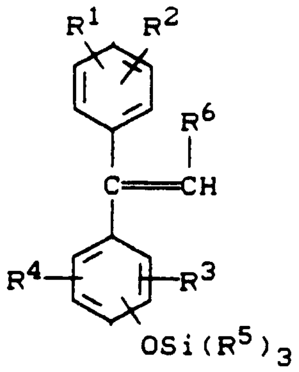

(I)

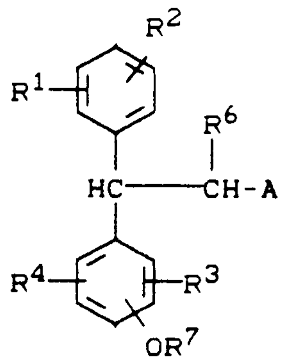

(II)

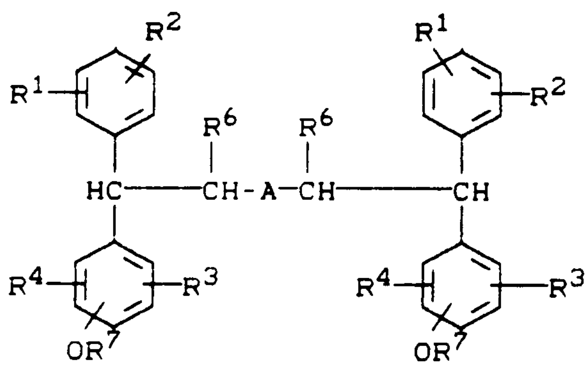

(III)

wobei

A = Polymerisat von anionisch polymerisierbaren Vinylverbindungen,

$R^1$, $R^2$ = H, $C_1$-$C_4$-Alkyl, $OCH_3$,

$R^3$ = H, $C_1$-$C_4$-Alkyl, O-$C_1$-$C_4$-Alkyl

$R^4$ = H, $C_1$-$C_4$-Alkyl,

$R^5$ = $C_1$-$C_4$-Alkyl,

$R^6$ = H, $C_1$-$C_4$-Alkyl

$R^7$ = H, $Si(R^5)_3$.

Die Trialkylsilyloxy-1,1-diphenylethylene der Formel (I) können nach an sich bekannten Verfahren hergestellt werden. Durch alkalikatalysierte thermische Spaltung von 1-Alkyl-1-Phenyl-bis(hydroxyphenyl)-methan der Formel (IV) sind Hydroxy-1,1- diphenylethylene der Formel (V) zugänglich (DE-B-1 235 894):

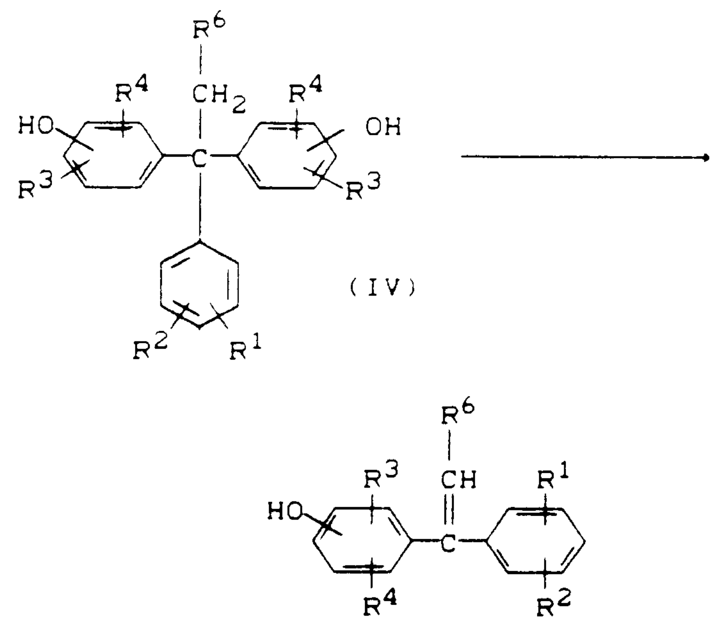

(IV)

(V)

wobei in Formel IV und V

$R^1$, $R^2$, $R^3$, $R^4$, $R^6$ die oben angegebene Bedeutung haben.

Durch Umsetzung der Hydroxydiphenylethylene der Formel (V) mit Halogensilanen der Formel (VI) in Gegenwart von Säurefängern bilden sich die erfindungsgemäßen Trialkylsilyloxy-1,1-diphenylethylene (I).

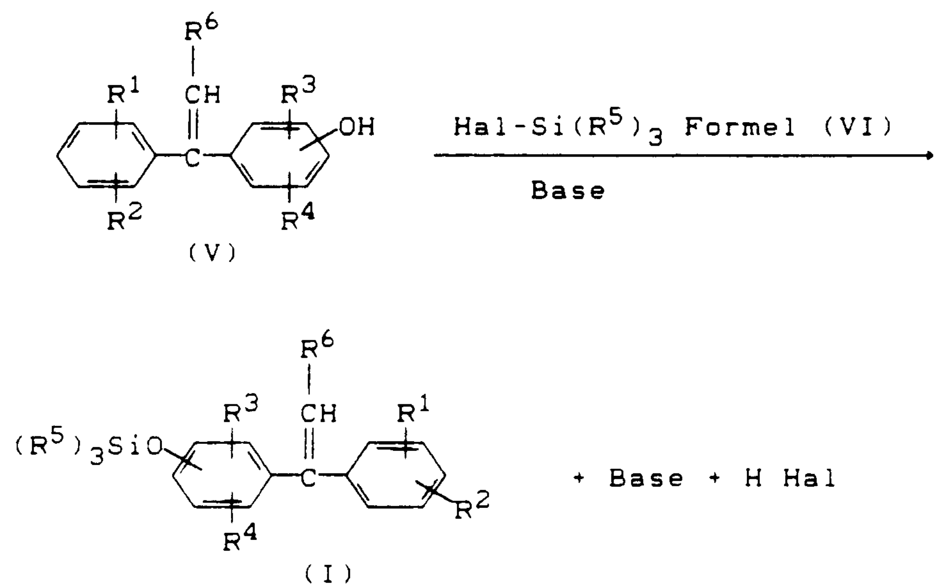


(V)

(I)

Hal = Cl, Br.

Ausgangsprodukt zur Herstellung der erfindungsgemäßen Verbindungen der Formel (I) sind also 1-Alkyl-1-phenyl- bis (hydroxy-phenyl)methane der Formel (IV), worin die Substituenten $R^1$ bis $R^6$ die oben angegebene Bedeutung haben.

Beispiele für Verbindungen der Formel (IV) sind:

1-Methyl-1-phenyl-bis(4-hydroxyphenyl)methan,
1-Ethyl-1-phenyl-bis(4-hydroxyphenyl)methan,
1-Propyl-1-phenyl-bis(4-hydroxyphenyl)methan,
1-Pentyl-1-phenyl-bis(4-hydroxyphenyl)methan,
1-Methyl-1-(4-methyl-phenyl)-bis(4-hydroxyphenyl)methan,

1-Methyl-1-(4-methoxyphenyl)-bis-(4-hydroxyphenyl)methan,
1-Methyl-1-(3,5-dimethylphenyl)-bis-(4-hydroxyphenyl)methan,
1-Methyl-1-phenyl-bis(2-hydroxy-phenyl)methan,
1-Methyl-1-phenyl-[(4-hydroxyphenyl)-(2′-hydroxyphenyl)]methan,
1-Methyl-1-phenyl-bis(3-methyl-4-hydroxyphenyl)methan,
1-Methyl-1-phenyl-bis(3-methoxy-4-hydroxyphenyl)methan,
1-Methyl-1-phenyl-bis(3,5-dimethyl-4-hydroxyphenyl)methan,
1-Methyl-1-phenyl-bis(3,5-dimethyl-2-hydroxyphenyl)methan.

Bevorzugte Verbindungen der Formel (IV) sind solche mit den Substituenten

$R^1$ = H,
$R^2$ = H, $CH_3$, $OCH_3$,
$R^3$ = H, $CH_3$, $OCH_3$,
$R^4$ = H, $CH_3$,
$R^6$ = H, $CH_3$.

Besonders bevorzugt ist $R^1$, $R^2$, $R^3$, $R^4$, $R^6$ Wasserstoff.

Die Verbindungen der Formel (IV) können unter den in DE-AS 1 235 894 angegebenen Bedingungen gespalten werden. Geeignete Halogensilane für die Umsetzung der Verbindungen gemäß Formel (V) zu den erfindungsgemäßen Trialkylsilyloxy-1,1-diphenylethylenen der Formel (I) entsprechen der Formel (VI).

Beispiele für Halogensilane der Formel (VI) sind:
Trimethylchlorsilan, Triethylbromsilan, Tripropylchlorsilan, Diethylmethylchlorsilan. Bevorzugt sind Trimethylchlorsilan und Triethylchlorsilan, besonders bevorzugt Trimethylchlorsilan.

Verbindungen der Formel (V) und Verbindungen der Formel (VI) können im allgemeinen im Molverhältnis 1:1 (oder mit geringem Überschuß an (VI)) in inerten Lösungsmitteln, wie Kohlenwasserstoffen (Benzin, Ligroin, Heptan, Pentan, Cyclohexan, Benzol, Toluol, Xylol), Halogenkohlenwasserstoffen (Chloroform, Methylenchlorid, Dichlorethan, Chlorbenzol) oder Ethern (Diethylether, Diisopropylether, Dibutylether) umgesetzt werden; bevorzugt sind Kohlenwasserstoffe und die Gegenwart einer Base wie Ammoniak, Triethylamin, Tributylamin, Pyridin, N-Methylimidazol, Chinolin. Man kann aber auch die Verbindung der Formel (V) in ein Salz überführen und dieses in trockener Form mit dem Halogensilan umsetzen. Geeignete Salze sind außer den obengenannten Aminsalzen auch solche des Lithiums, Natriums und Kaliums.

Die Reaktionstemperatur liegt bei 0 bis 120 °C, bevorzugt 10 bis 100 °C.

Die Base muß in mindestens stöchiometrischer Menge bezogen auf (V) zweckmäßig in einem geringen Überschuß eingesetzt werden.

Nach Abtrennung der bei der Umsetzung entstandenen Salze, beispielsweise durch Filtration, können die Verbindungen der Formel (I) direkt weiter verwendet werden. Zusätzliche Reinigung ist durch Destillation möglich.

Geeignete Verbindungen der Formel (I) zur Herstellung der neuen Polymeren sind beispielsweise:
4-Methyl-4′-trimethylsilyloxy-1,1-diphenylethylen,
4-Ethyl-4′-triethylsilyloxy-1,1-diphenylethylen,
3-Methoxy-4′-trimethylsilyloxy-1,1-diphenylethylen,
4-Isopropyl-4′-triethylsilyloxy-1,1-diphenylethylen,
4-Methyl-2′-trimethylsilyloxy-5′-methyl-1,1-diphenylethylen,
3-Methyl-4-trimethylsilyloxy-1,1-diphenylethylen,
4-Methoxy-2′-trimethylsilyloxy-3′,5′-dimethyl-1,1-diphenylethylen,
3-Methoxy-4-trimethylsilyloxy-1,1-diphenylethylen,
4-Trimethylsilyloxy-β-methyl-1,1-diphenylethylen,
4-Trimethylsilyloxy-β-propyl-1,1-diphenylethylen,
besonders bevorzugt
4-Trimethylsilyloxy-1,1-diphenylethylen.

Das Verfahren zur Herstellung der polymeren Verbindungen mit Aryl-trimethylsilyl-ether-Endgruppen oder der polymeren Verbindungen mit phenolischen Hydroxyl-Endgruppen gemäß Formeln (II) und (III) erfordert folgende Schritte:

1. Herstellung eines Polyanions durch anionische Polymerisation einer geeigneten Vinylverbindung.

2. Umsetzung des Polyanions mit einer Verbindung der Formel (I)

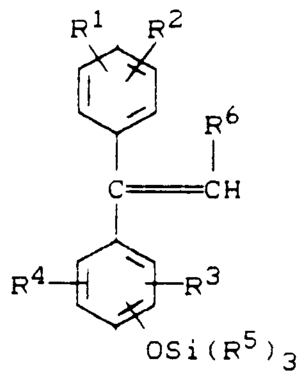

(I)

wobei $R^1$ bis $R^6$ die oben angegebene Bedeutung haben.

3. Neutralisation der Umsetzungsprodukte (die selbst Polyanionen sind) mit protischen Verbindungen unter Bildung der polymeren Verbindungen mit Aryl-trisilyloxy-ether-Endgruppen gemäß Formeln (II) und (III) mit $R^7$ = Si $(R^5)_3$ und gegebenenfalls

4. Silyletherspaltung zur Herstellung der polymeren Verbindungen mit phenolischen Hydroxyl-Endgruppen gemäß Formel (II) und (III) mit $R^7$ = H.

In Schritt 1 polymerisiert man anionisch polymerisierbare Vinylverbindungen in aromatischen oder aliphatischen Kohlenwasserstoffen oder einem Ether mit einer Alkylalkalimetall-, Arylalkalimetallverbindung oder einer oligomeren α-Methylstyrol-Alkalimetall-Verbindung unter Ausbildung eines "lebenden" Polyanions oder Polydianions bis zum vollständigen Umsatz des Monomeren. In Schritt 2 setzt man dieses mit Verbindungen der Formel (I) um, wobei sich ein neues Polyanion bzw. -dianion bildet. In Schritt 3 neutralisiert man das Polyanion bzw. -dianion mit protischen Verbindungen und isoliert das Polymere (II) oder (III) mit Aryltrisilyloxy-ether-Endgruppen ($R^7$ = $Si(R^5)_3$).

Zur Herstellung der Polymeren (II) oder (III) mit phenolischen Hydroxyl-Endgruppen ($R^7$ = H) neutralisiert man nach den Schritten 1 und 2 das Polyanion bzw. Dianion im Schritt 3, isoliert gegebenenfalls das Produkt und spaltet den Silylether.

Geeignete anionisch polymerisierbare Verbindungen im Sinne der Erfindung sind z.B. Styrol, p-Methylstyrol, Vinylpyridin, Vinylnaphthalin, Isopropenylnaphthalin, 1,3-Butadien, Isopren oder Mischungen daraus. Bevorzugt sind Styrol, 1,3-Butadien, Isopren oder Mischungen aus Styrol/1,3-Butadien und Styrol/Isopren.

Geeignete aromatische und aliphatische Kohlenwasserstoffe im Sinne der Erfindung sind z.B. Toluol, Benzol, Xylol, Pentan, Hexan, Cyclohexan. Ether im Sinne der Erfindung sind Tetrahydrofuran und Dioxan. Zur Einstellung bestimmter Reaktionsgeschwindigkeiten kann auch ein Gemisch aus aromatischen oder aliphatischen Kohlenwasserstoffen und Ethern verwendet werden.

Zur Herstellung der Polymeren gemäß Formel (II) werden Alkylalkalimetallverbindungen, insbesondere n-Butyl- oder sec.-Butyllithium als Initiatoren eingesetzt.

Zur Herstellung des Polymeren gemäß Formel (III) werden Arylalkalimetallverbindungen, insbesondere Naphthalinnatrium, Naphthalinkalium, oligo-α-Methylstyrylnatrium bzw. oligo-α-Methylstyrylkalium oder 1,3-Phenylen-bis(3-methyl-1-phenyl-pentyliden)bis(lithium) als Initiatoren verwendet.

Die anionisch polymerisierbaren Verbindungen können bei -100 °C bis +80 °C, vorzugsweise -78 °C bis +50 °C, polymerisiert werden.

Die "lebenden" Polymeranionen können mit der Verbindung (I) bei -78 °C bis +100 °C, vorzugsweise bei 0 °C bis +50 °C, umgesetzt werden Verbindung (I) wird vorzugsweise in Überschuß bezogen auf Initiator eingesetzt.

Geeignete Neutralisationsmittel für die "lebenden" Polymeranionen sind z.B. schwache anorganische oder organische Säuren, insbesondere Methanol oder Essigsäure.

Da das Verfahren mit "lebenden" Carbanionen arbeitet, sind natürlich Bedingungen einzuhalten, unter denen "lebende" Carbanionen beständig sind, z.B. inerte Atmosphäre, Ausschluß von Luftsauerstoff und -feuchtigkeit.

Die Silylether der Formeln (II) und (III) ($R^7$ = $Si(R^5)_3$ können vorzugsweise durch Ansäuern ihrer Lösungen mit anorganischen Säuren (z.B. Salzsäure) oder organischen Säuren (z.B. p-Toluolsulfonsäure) gespalten werden. Die Spaltung führt man im Temperaturbereich von Zimmertemperatur bis zur Siedetemperatur des Lösungsmittels durch.

Die Polymeren der Formeln (II) und (III) ($R^7$ = H) können durch Ausfällen des Polymeren aus der Lösung, vorzugsweise unter Verwendung von Methanol, oder durch Ausdampfen der Polymerlösung in bekannten Ausdampfaggregaten isoliert werden.

Die Polymeren gemäß Formeln (II) und (III) besitzen (über das Verhältnis Monomerkonzentration zu Initiatorkonzentration steuerbare) Molekulargewichte von 500 g/mol bis 500 000 g/mol, vorzugsweise 1 000 g/mol bis 250 000 g/mol, besonders bevorzugt 1 000 g/mol bis 100 000 g/mol.

Die Polymeren der Formeln (II) und (III) eignen sich als Stabilisatoren und/oder Gleitmittel für synthetische Polymere.

## Beispiele

### 1.1 Herstellung von 1-Methyl-1-phenyl-bis(4-hydroxy phenyl)methan

In ein Gemisch von 240 g (2 Mol) Acetophenon, 940 g (10 Mol) Phenol und 30 g Mercaptopropionsäure leitet man bis zur Sättigung HCl-Gas ein, wobei langsam auf 50 °C erwärmt wird. Man hält 5 h bei diesen Bedingungen, läßt über Nacht stehen und destilliert zunächst im Wasserstrahlvakuum HCl und Wasser und dann das überschüssige Phenol bis zu einer Sumpftemperatur von 120 °C ab. Der verbleibende Rückstand von 510 g wird aus 1250 ml Toluol unter Rückfluß umgelöst, nach Abkühlen abgesaugt und getrocknet: 412 g Fp. 185-7 °C d.s. 72 % d.Th. (MG 580).

### 1.2 Herstellung von 4-Hydroxy-1,1-diphenylethylen

400 g des nach obigen Verfahren erhaltenen Triphenylmethanderivates werden mit 4 g NaOH auf 180 - 220 °C gebracht. Bei 130 - 160 °C und etwa 15 mbar gehen die Spaltprodukte über. Man erhält insgesamt 340 g Destillat und ca. 56 g braunen harzigen Rückstand.

Durch Redestillation wird aus diesem Destillat eine Fraktion von 120 g isoliert, die der Titelverbindung entspricht (45 % d.Th.; MG 196).

### 1.3 Herstellung von 4-Trimethylsilyloxy-1,1-diphenylethylen

100 g (0,51 M) des durch Spaltung gewonnenen 4-Hydroxy-1,1-diphenyl-ethylens werden in 200 ml Cyclohexan gelöst, mit 56 g (0,56 M) Triethylamin versetzt und dazu bei RT bis 50 °C 56 g (0,56 M) Trimethylchlorsilan in ca. 1 h zugetropft. Nach weiteren 2 h bei 50 °C wird von ausgefallenem Salz abgedrückt, der Filterkuchen gut mit Cyclohexan gewaschen und das gesamte Filtrat destilliert. Man erhält nach Redestillation der Hauptfraktion $K_{p1,5}$ 143-8 °C 110 g farblose Flüssigkeit ($n_D^{20}$ = 1,5558), die nach NMR der Titelverbindung entspricht und mindestens 95 %ig ist (67 %. d.Th.).

### 1.4 Umsetzung eines "lebenden" Polystyrolanions mit 4-Trimethylsilyloxy-1,1-diphenylethylen (Herstellung des Polymeren gemäß Formel (II) mit $R^7$ = $Si(R^5)_3$

Zu einem Gemisch aus 800 ml Toluol und 100,2 g Styrol wurden unter $N_2$-Atmosphäre 6,5 ml einer 2,5 molaren n-Butyllithium-Lösung (in Hexan) mittels einer Spritze unter schnellem Rühren bei Raumtemperatur gegeben, wobei sich die Lösung orangerot färbte. Die Temperatur wurde anschließend auf 40 °C erhöht. Nach einer Polymerisationszeit von 3 h wurde die Lösung auf Zimmertemperatur gebracht und 45 ml einer Lösung aus 10g 4-Trimethylsilyloxy-1,1-diphenyl-ethylen und 60 g Toluol mittels einer Spritze zugegeben, wobei sich die Farbe der Lösung nach Dunkelrot veränderte. Die Reaktionszeit betrug 1 h bei Zimmertemperatur. Anschließend wurde das Polymer mit 2 ml Methanol ($N_2$-gesättigt) neutralisiert und durch Fällung in Methanol isoliert.

### 1.5 Spaltung des Silylethers

(Herstellung eines Polymeren gemäß Formel (II) ($R^7$ = H)

Zu einer Lösung von 100 g des im obengenannten Beispiel beschriebenen Polymeren in 800 ml Tetrahydrofuran wurden bei 40 °C 20 ml einer 10 %igen wäßrigen Salzsäure gegeben. Die Reaktionszeit betrug 1 h. Anschließend wurde das Polymere in Methanol gefällt, neutral gewaschen und getrocknet.

GPC-Analyse (Polystyrol-Eichung): $M_n$ = 6 500 g/mol, $M_w$ = 7.900 g/mol.

2.1 Umsetzung eines "lebenden" Polystyrol-di-anions mit 4-Trimethyl-silyloxy-1,1-diphenylethylen

(Herstellung des Polymeren gemäß Formel (III) mit $R^7$ = Si $(R^5)_3$)

Zu 0,55 g (0,024 mol) Natrium in 250 ml Tetrahydrofuran werden 4 g (0,031 mol) Naphthalin unter $N_2$-Atmosphäre gegeben, wobei sich die Lösung intensiv grün färbte, Nach ca. 2 h bei Zimmertemperatur hatte sich das Natrium vollständig zu Naphthalin-Natrium umgesetzt. Anschließend wurden 50 g Styrol mit einer Spritze während 2 h zugetropft, wobei die Farbe nach rot umschlug. Nach weiteren 30 min wurde eine Lösung aus 8 g (0,03 mol) 4-Trimethylsilyloxy-1,1-diphenylethylen und 15 ml Toluol mit einer Spritze zugegeben. Nach einer Reaktionszeit von 2 h bei Zimmertemperatur wurde das Polymere mit Methanol ($N_2$ gesättigt) neutralisiert und durch Fällung in Methanol isoliert.

2.2 Spaltung des Silylethers

(Herstellung des Polymeren gemäß Formel (III) mit $R^7$ = H)

Zu einer Lösung von 45 g des im obengenannten Beispiel beschriebenen Polymeren in 350 ml Tetrahydrofuran wurden bei 40 °C 35 ml 10 %igen wäßrige Salzsäure gegeben. Nach einer Reaktionszeit von einer Stunde wurde das Polymere in Methanol gefällt, isoliert, neutral gewaschen und getrocknet.

In Makromol. Chem. 190, Seiten 487-493 (1989) sind 4-Hydroxyphenyl-terminierte Polystyrole des hier in Rede stehenden Typs publiziert.

Hierin ist die Verwendung als Kettenabbrecher nicht beschrieben.

Es wurde nun gefunden, daß sich die Polymeren der Formel (II) mit $R^7$ = H als polymere Kettenabbrecher bei der Herstellung von aromatischen Polycarbonaten nach dem Phasengrenzflächenverfahren oder dem Verfahren in homogener Phase verwenden lassen.

Gegenstand der vorliegenden Erfindung ist somit die Verwendung der Polymeren der Formel (II) der EP-A-348 744

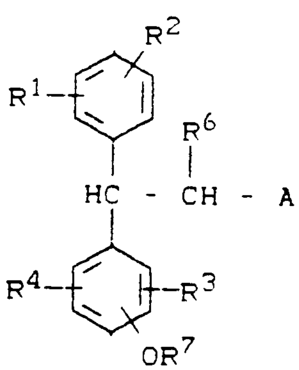

(II),

worin

A ein Polymerisat von anionisch polymerisierbaren Vinylverbindungen mit einem $\overline{M}n$ von 1.500 bis 18.000, vorzugsweise von 2.000 bis 15.000 (gemessen mittels Gelpermeationschromatographie),

$R^1$ und $R^2$ H, $C_1$-$C_4$-Alkyl oder $CH_3$-O-,

$R^3$ H, $C_1$-$C_4$-Alkyl oder $C_1$-$C_4$-Alkoxy,

$R^4$ H oder $C_1$-$C_4$-Alkyl,

$R^6$ H oder $C_1$-$C_4$-Alkyl und

$R^7$ H

bedeuten, als Kettenabbrecher für die Herstellung von thermoplastischen, aromatischen Polycarbonaten nach dem Phasengrenzflächenverfahren oder nach dem Verfahren in homogener Lösung, dem sogenannten Pyridinverfahren.

Geeignete Verbindungen der Formel (II) mit $R^7$ = H sind die in der EP-A-348 744 summarisch genannten, einzeln beschriebenen und aus den Verbindungen der Formel (I) der EP-A-348 744 gemäß der Lehre dieser Patentanmeldung herstellbaren Verbindungen.

Für die erfindungsgemäße Herstellung der thermoplastischen Polycarbonate geeignete Diphenole sind im Prinzip alle Diphenole, deren OH-Gruppen unter den Bedingungen des Phasengrenzflächenverfahrens oder des Verfahrens in homogener Phase unter Polycarbonatbildung reagieren, also beispielsweise nicht durch sterische Behinderung oder sonstige molekulare Faktoren an der Reaktion gehindert sind, und die ansonsten entweder unsubstituiert sind oder nur solche Substituenten haben, die unter den genannten Bedingungen der Polycarbonatherstellung inert sind, wie beispielsweise Alkylsubstituenten oder Halogensubstituenten.

Geeignete Diphenole sind insbesondere solche der Formel (VII)

HO-D-OH (VII),

worin

-D- ein zweibindiger Arylenrest mit 6 bis 50 C-Atomen, vorzugsweise mit 12 bis 45 C-Atomen ist, der einkernig oder mehrkernig sein kann, mehrkernig linear verknüpft, mehrkernig verzweigt verknüpft oder mehrkernig annelliert verknüpft sein kann, der als Bindeglieder noch Heteroatome sowie auch C-haltige Heterosegmente enthalten kann, wobei diese C-Atome oder Heterosegmente nicht unter den vorstehend genannten 50 C-Atomen der Diphenole der Formel (VII) subsummiert sind.

Die Diphenole der Formel (VII) können unsubstituiert sein oder die vorstehend genannten inerten Substituenten haben, also beispielsweise die erwähnten Halogensubstituenten oder die erwähnten Alkylsubstituenten, wobei die C-Atome potentieller Substitutenten, also beispielsweise der Alkylsubstituenten unter die vorstehend genannten 50 C-Atome oder Diphenole der Formel (VII) zu subsummieren sind.

Geeignete Diphenole (VII) sind beispielsweise
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole,
sowie deren kernalkylierte und kernhalogenierte Verbindungen.

Diese und weitere geeignete Diphenole sind z.B. in den US-A-3 028 365, 2 999 835, 3 148 172, 2 991 273, 3 271 367 und 2 999 846, in den DE-A-1 570 703, 2 063 050, 2 036 052, 2 211 956, der FR-A-1 561 518, in der Monographie "H. Schnell, Chemistry and Physics of Polycarbonates, Interscience Publishers, New York 1964", in der DE-A-38 32 396 sowie in den JP-A 62039/1986, 62040/1986 und 105550/1986 beschrieben.

Bevorzugte Diphenole sind z.B.:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
$\alpha,\alpha'$-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-Dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
$\alpha,\alpha'$-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und

1,1-Bis-(4-hydroxyphenyl)-3,3,5-trimethylcyclohexan (TMC-Bisphenol).

Besonders bevorzugte Diphenole sind z.B.:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan

Es können auch beliebige Mischungen der vorgenannten Diphenole verwendet werden.

Zwecks weiterer Veränderung des Fließverhaltens können auch geringe Mengen, vorzugsweise Mengen zwischen 0,05 und 2,0 Mol-%, bezogen auf Mole eingesetzter Diphenole, an tri- oder mehr als trifunktionellen Verbindungen, insbesondere solchen mit drei oder mehr als drei phenolischen Hydroxylgruppen mitverwendet werden. Einige der verwendbaren Verbindungen mit drei oder mehr als drei phenolischen Hydroxylgruppen sind beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Neben den erfindungsgemäßen Kettenabbrechern der Formel (II) können noch maximal 98 Mol-%, bezogen auf die jeweilige Molmenge aller eingesetzten Kettenabbrecher, an anderen Kettenabbrechern, also niedermolekularen Monophenolen oder niedermolekularen Monocarbonsäurehalogeniden wie Phenol selbst oder Benzoesäurechlorid, insbesondere jedoch Monoalkylphenole oder Dialkylphenole mit bis zu 20 C-Atomen in den Alkylsubstituenten mitverwendet werden, also solche der Formel (VIII)

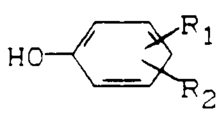

(VIII),

worin

$R_1$ und $R_2$ unabhängig voneinander H und $C_1$-$C_{20}$-Alkyl sein können, wobei jedoch mindestens einer der Reste $R_1$ oder $R_2$ jeweils ein $C_1$-$C_{20}$-Alkylrest ist.

Gegenstand der vorliegenden Erfindung ist somit auch die Verwendung der Polymeren der Formel (II) als Kettenabbrecher in Kombination mit bis maximal 98 Mol-%, bezogen auf die jeweilige Molmenge aller eingesetzten Kettenabbrecher, an anderen Kettenabbrechern zur Herstellung von thermoplastischen aromatischen Polycarbonaten nach dem Phasengrenzflächenverfahren oder nach dem Verfahren in homogener Phase.

Für das erfindungsgemäße Verfahren geeignete Carbonatspender sind vor allem Phosgen und die Chlorkohlensäureester der Diphenole.

Die Bedingungen des Phasengrenzflächenverfahrens, Lösungsmittel, wäßrige alkalische Phase, Katalysator, Temperatur, Druck, Aufarbeitung sind die üblichen, bekannten. Entsprechendes gilt für das Verfahren in homogener Phase (Pyridinverfahren).

Gegenstand der vorliegenden Erfindung ist somit auch ein Verfahren zur Herstellung von thermoplastischen, aromatischen Polycarbonaten aus Diphenolen, Kettenabbrechern und Kohlensäurebishalogeniden und gegebenenfalls Verzweigern unter den Reaktionsbedingungen des Phasengrenzflächenverfahrens oder

des Verfahrens in homogener Phase, das dadurch gekennzeichnet ist, daß man als Kettenabbrecher Verbindungen der Formel (II) in Mengen von 0,1 bis 25 Gew.-%, vorzugsweise in Mengen von 1 bis 20 Gew.-% und insbesondere in Mengen von 1,5 bis 15 Gew.-%, bezogen auf die Menge an eingesetzten Diphenolen, einsetzt, wobei maximal 98 Mol-%, vorzugsweise maximal 80 Mol-% und insbesondere maximal 70 Mol-% dieser einzusetzenden Kettenabbrecher durch andere Kettenabbrecher ersetzt sind. Die Menge richtet sich u.a. auch nach den Molekulargewichten der anionischen Polymerisate A.

Die Herstellung der erfindungsgemäßen Polycarbonate erfolgt vorzugsweise nach dem Phasengrenzflächenverfahren (vgl. H. Schnell, "Chemistry and Physics of Polycarbonates", Polymer Reviews, Vol. IX, Seite 33ff., Interscience Publ., 1964). Hierbei werden die Diphenole der Formel (VII) in wäßrig alkalischer Phase gelöst. Dazu werden die zur Herstellung der erfindungsgemäßen Polycarbonate erforderlichen Verbindungen der Formel (II), gegebenenfalls in Kombination mit den anderen Kettenabbrechern, in einem organischen Lösungsmittel gelöst, zugegeben. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0 und 40 °C.

Die gegebenenfalls mitzuverwendenden 0,05 bis 2 Mol-%, bezogen auf Mole eingesetzte Diphenole, an Verzweigern können entweder mit den Diphenolen in der wäßrig alkalischen Phase vorgelegt werden oder mit den Kettenabbrechern in dem organischen Lösungsmittel gelöst vor der Phosgenierung zugegeben werden.

Anstelle der einzusetzenden Diphenole können auch deren Mono- und/oder Bis-chlorkohlensäureester mitverwendet werden, wobei diese in organischen Lösungsmitteln gelöst zugegebenen werden. Die Menge an Kettenabbrechern sowie an Verzweiger richtet sich dann nach Molen Diphenolat-Struktureinheiten, als beispielsweise -O-D-O-; ebenso kann bei Einsatz von Chlorkohlensäureester die Phosgenmenge in bekannter Weise entsprechend reduziert werden.

Die erfindungsgemäß verwendeten Kettenabbrecher der Formel (II), gegebenenfalls in Kombination mit den anderen Kettenabbrechern, können auch während der Phosgenierung zugesetzt werden. Geeignete organische Lösungsmittel für die Lösung der Vinylpolymerisat-Kettenabbrecher der Formel (II) sowie gegebenenfalls für die Verzweiger, anderen Kettenabbrecher und den Chlorkohlensäureestern sind beispielsweise Methylenchlorid, Chlorbenzol, Aceton, Acetonitril sowie Mischungen dieser Lösungsmittel, insbesondere Mischungen aus Methylenchlorid und Chlorbenzol.

Als organische Phase für die Phasengrenzflächenpolykondensation dient beispielsweise Methylenchlorid, Chlorbenzol sowie Mischungen aus Methylenchlorid und Chlorbenzol.

Die Herstellung der erfindungsgemaßen Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole eingesetzter Diphenole bzw. Mole eingesetzter Diphenolat-Struktureinheiten verwendet werden. Die Katalysatoren können vor Beginn der Phosgenierung oder während oder auch nach der Phosgenierung zugesetzt werden.

Gegenstand der vorliegenden Erfindung sind außerdem die nach dem erfindungsgemäßen Verfahren erhältlichen thermoplastischen, aromatischen Polycarbonate bzw. Polycarbonatgemische.

Gegenstand der vorliegenden Erfindung sind insbesondere thermoplastische aromatische Polycarbonate mit $\overline{M}w$ (Gewichtsmittelmolekulargewichte, ermittelt durch Lichtstreuung oder Gelchromatographie in bekannter Weise nach vorheriger Eichung mit Polystyrol) von mindestens 10.000, insbesondere von 15.000 bis 200.000 und besonders bevorzugt von 20.000 bis 80.000, der Formel (IX)

$$E-\overset{\overset{\displaystyle O}{\|}}{C}-\left[O-D-O-\underset{\underset{\displaystyle O}{\|}}{C}-\right]_{p}-O-D-O-\underset{\underset{\displaystyle O}{\|}}{C}-E' \qquad (IX),$$

worin

-O-D-O- der Diphenolat-Rest der Diphenole der Formel (VII) ist, worin -D- die für Formel (VII) genannte Bedeutung hat, und

worin

E- und E′- gleich oder verschieden sind und wobei mindestens einer der Reste E- oder E′- einem Rest der Formel (IIa) entspricht,

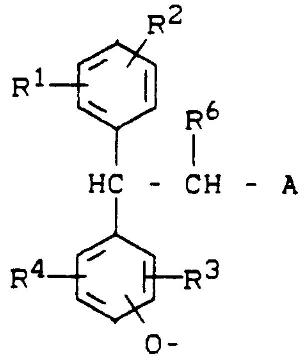

(IIa),

worin A, $R^1$, $R^2$, $R^3$, $R^4$ und $R^6$ die für Formel (II) genannte Bedeutung haben und wobei die übrigen Endgruppen E- und E'- aus der Reaktion mit den anderen, konventionellen Kettenabbrechern, gegebenenfalls unter Einbeziehung von Kohlensäurebishalogeniden, resultieren, und worin "p" der Polymerisationsgrad ist, der aus den Molekulargewichten von mindestens 10.000, insbesondere von 15.000 bis 200.000, resultiert.

Die Isolierung der erfindungsgemäßen Polycarbonate bzw. Polycarbonatgemische erfolgt in bekannter Weise.

Die erfindungsgemäßen Polycarbonate können die für Polycarbonate und/oder für Polystyrole üblichen Additive in den üblichen Mengen enthalten, also beispielsweise Stabilisatoren, Füllstoffe, Entformungsmittel, Pigmente und/oder Flammschutzmittel. Man kann die während oder nach der Polycarbonatherstellung in bekannter Weise zugeben.

Die erfindungsgemäßen Polycarbonate können in bekannter Weise zu beliebigen Formkörpern via Extrusion oder Spritzguß auf den bekannten Verarbeitungsmaschinen verarbeitet werden.

Die erfindungsgemäßen Polycarbonate sowie die daraus hergestellten Formkörper zeichnen sich durch eine gute Eigenschaftskombination aus, insbesondere durch gutes Fließverhalten, hohe Transparenz und gutes Verarbeitungsverhalten unter Erhalt der Wärmeformbeständigkeit.

So sind Polycarbonate mit speziellen, ungesättigten Endgruppen thermisch und oxidativ empfindlich; ferner müssen sie vorher hergestellt, isoliert und gegebenenfalls gereinigt werden. Demgegenüber ist das erfindungsgemäße Verfahren ein Einstufenprozess, der sofort zu Polycarbonaten mit stabilen Endgruppen führt, wobei die resultierende Polycarbonate nach bestehenden Verfahren aufarbeitbar sind.

Ferner können durch gezielten Einsatz anderer, bekannter Kettenregler die Fließeigenschaften noch zusätzlich gezielt eingestellt werden. So reichen oft schon geringe Mengen der erfindungsgemäßen Kettenabbrecher aus, um die geschilderten Effekte zu erzielen.

## Beispiele

Die Bestimmung der Molmassen $M_n$ erfolgte durch GPG-Analyse (Polystyrol-Eichung).

I) Herstellung von monofunktionellen Polystyrolen mit phenolischen Hydroxylendgruppen

1) Zu einem Gemisch aus 600 ml Toluol und 100 g Styrol werden unter $N_2$-Atmosphäre 4 ml einer 2,5 molaren n-Butyllithium-Losung (in Hexan) mittels einer Spritze unter schnellem Rühren bei Raumtemperatur gegeben, wobei sich die Lösung organgerot färbte. Die Temperatur wurde anschließend auf 40 °C erhöht. Nach einer Polymerisationszeit von 3h wurde die Lösung auf Raumtemperatur gebracht und 35 g einer Lösung aus 10 g 4-Trimethylsilyloxy-1,1-diphenylethylen in Toluol mittels einer Spritze zugegeben, wobei sich die Farbe der Lösung nach dunkelrot veränderte. Die Reaktionszeit betrug 2h bei Raumtemperatur.

Anschließend wurde die Polymerlösung mit 2 ml Methanol ($N_2$-gesättigt) versetzt und das Polymer durch Fällung in Methanol isoliert.

Zur Spaltung des Silylethers wurde das Polymer in 400 ml Tetrahydrofuran (THF) gelöst und bei 40 °C mit 100 ml einer 1 molaren wäßrigen Salzsäurelösung für 2h gerührt. Zur Isolierung des Polymers wurde in Methanol gefällt, neutral gewaschen und getrocknet.

Das resultierende Styrolpolymerisat mit einer phenolischen OH-Funktion wies eine Molmasse $M_n$ = 10 000 g/mol auf.

2) Zu einem Gemisch aus 600 ml Toluol und 100 g Styrol werden unter $N_2$-Atmosphäre 5,5 ml einer 2,5 molaren n-Butyllithium-Lösung (in Hexan) mittels einer Spritze unter schnellem Rühren bei Raumtemperatur gegeben, wobei sich die Lösung orangerot färbte. Die Temperatur wurde anschließend auf 40 °C erhöht. Nach einer Polymerisationszeit von 3h wurde die Lösung auf Raumtemperatur gebracht und 47 g einer Lösung aus 10 g 4-Trimethylsilyloxy-1,1-diphenylethylen in Toluol mittels einer Spritze zugegeben, wobei sich die Farbe der Lösung nach dunkelrot veränderte. Die Reaktionszeit betrug 2h bei Raumtemperatur. Anschließend wurde die Polymerlösung mit 2 ml Methanol ($N_2$-gesättigt) versetzt und das Polymer durch Fällung in Methanol isoliert.

Zur Spaltung des Silylethers wurde das Polymer in 400 ml Tetrahydrofuran (THF) gelöst und bei 40 °C mit 100 ml einer 1 molaren wäßrigen Salzsäurelösung für 2h gerührt. Zur Isolierung des Polymers wurde in Methanol gefällt, neutral gewaschen und getrocknet.

Das resultierende Styrolpolymerisat mit einer phenolischen OH-Funktion wies eine Molmasse $M_n$ = 7300 g/mol auf.

3) Zu einem Gemisch aus 250 ml Toluol und 8 ml einer 2,5 molaren n-Butyllithium-Lösung (in Hexan) werden unter $N_2$-Atmosphäre mittels einer Spritze unter schnellem Rühren bei Raumtemperatur 5 ml Styrol gegeben, wobei sich die Lösung orangerot färbte. Nach 15 Minuten wurden weitere 50 ml Styrol zugegeben. Die Temperatur wurde anschließend auf 40 °C erhöht. Nach einer Polymerisationszeit von 2h wurde die Lösung auf Raumtempeatur gebracht und eine Lösung aus 10,6 g 4-Trimethylsilyloxy-1-1-diphenylethylen in 30 ml Toluol mittels einer Spritze zugegeben, wobei sich die Farbe der Lösung nach dunkelrot veränderte. Die Reaktionszeit betrug 2h bei Raumtemperatur. Anschließend wurde die Polymerlösung mit 2 ml Methanol ($N_2$-gesättigt) versetzt und das Polymer durch Fällung in Methanol isoliert.

Zur Spaltung des Silylethers wurde das Polymer in 800 ml Tetrahydrofuran (THF) gelöst und bei 40 °C mit 100 ml einer 1 molaren wäßrigen Salzsäurelösung für 2 h gerührt. Zur Isolierung des Polymers wurde in Methanol gefällt, neutral gewaschen und getrocknet.

Das resultierende Styrolpolymerisat mit einer phenolischen OH-Funktion wies eine Molmasse $M_n$ = 2500 g/mol auf.

II) Herstellung der Polycarbonate

Beispiel II 1)

22,8 g (0,1 Mol) Bisphenol A (2,2-Bis-(4-hydroxyphenyl)-propan, 26,0 g (0,65 mol) NaOH und 258 g Wasser werden in einer Inertgasatmosphäre unter Rühren gelöst. Dann fügt man eine Lösung von 1,2 g des Produktes I 1) und 0,9888 g 4-(1,3-Tetramethylbutyl)-phenol in 250 g Methylenchlorid zu. In die gut gerührte Lösung wurden bei pH 13-14 und 21-25 °C 19,8 g (0,2 Mol) Phosgen eingeleitet. Nach 5 Min. wird 0,2 ml N-Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,257.

Beispiel II 2)

Wie in Beispiel II 1) wurde mit 4,05 g des Produktes I 1) und 0,9466 g 4-(1,3-Tetramethylbutyl)-phenol zum Polycarbonat umgesetzt. Das Polycarbonat zeigte eine relative Lösungsviskosität von 1,238.

Beispiel II 3)

Wie in Beispiel II 1) wurde mit 1,2 g des Produktes I 2) und 0,997 g 4-(1,3-Tetramethylbutyl)-phenol zum Polycarbonat umgesetzt. Das Polycarbonat zeigte eine relative Lösungsviskosität von 1,243.

Beispiel II 4)

Wie in Beispiel II 1) wurde mit 4,05 g des Produktes I 2) und 0,9167 g (4-(1,3-Tetramethylbutyl)-phenol zum Polycarbonat umgesetzt. Das Polycarbonat zeigte eine relative Lösungsviskosität von 1,257.

Beispiel II 5)

Wie in Beispiel II 1) wurde mit 1,2 g des Produkts I 3) und 0,9311 g 4-(1,3-Tetramethylbutyl)-phenol zum Polycarbonat umgesetzt. Das Polycarbonat zeigte eine relative Lösungsviskosität von 1,246.

Beispiel II 6)

Wie in Beispiel II 1) wurde mit 4,05 g des Produktes I 3) und 0,6963 g 4-(1,3-Tetramethylbutyl)-phenol zum Polycarbonat umgesetzt. Das Polycarbonat zeigte eine relative Lösungsviskosität von 1,252.

An den Proben wurde die Glastemperatur durch DSC-Messung bestimmt. Die Schmelzviskosität wurde bei der angebenen Scherrate an einem Kapillarviskosimeter bei 300 °C bestimmt.

| Beispiel | Glastemperatur [C °] | Schmelzviskosität [Pa.s] | |
|---|---|---|---|
| | | 100 $s^{-1}$ | 1000 $s^{-1}$ |
| Vergleich* | 150 | 360 | 250 |
| II 1) | 150 | 215 | 135 |
| II 2) | 149 | 149 | 90 |
| II 3) | 148 | 217 | 148 |
| II 4) | 149 | 148 | 95 |
| II 5) | 148 | 206 | 156 |
| II 6) | 147 | 224 | 127 |

*: Polycarbonat mit einer rel. Lösungsviskosität von 1,240, hergestellt mit 4-(1,3-Tetramethylbutyl)-phenol als Kettenabbrecher

**Patentansprüche**

**1.** Verwendung der Polymeren der Formel (II)

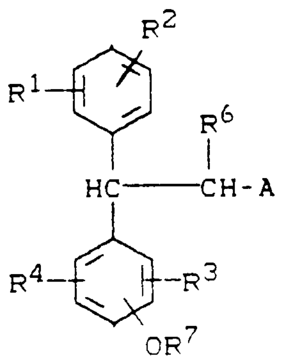

(II)

wobei

| | |
|---|---|
| A | ein Polymerisat von anionisch polymerisierbaren Vinylverbindungen mit einem $\overline{M}n$ von 1.500 bis 18.000 (gemessen mittels Gelpermeationschromatographie), |
| $R^1$ und $R^2$ | H, $C_1$-$C_4$-Alkyl oder $CH_3$-O-, |
| $R^3$ | H oder $C_1$-$C_4$-Alkyl, |
| $R^4$ | H oder $C_1$-$C_4$-Alkyl |
| $R^6$ | H oder $C_1$-$C_4$-Alkyl und |
| $R^7$ | H bedeuten, als Kettenabbrecher für die Herstellung von thermoplastischen, aromatischen Polycarbonaten nach dem Phasengrenzflächenverfahren oder nach dem Verfahren in homogener Lösung. |

**2.** Verwendung der Polymeren der Formel (II) gemäß Anspruch 1 als Kettenabbrecher in Kombination mit bis maximal 98 Mol-%, bezogen auf die jeweilige Molmenge aller eingesetzten Kettenabbrecher, an anderen Kettenabbrechern zur Herstellung von thermoplastischen, aromatischen Polycarbonaten nach dem Phasengrenzflächenverfahren oder nach dem Verfahren in homogener Phase.

**3.** Verfahren zur Herstellung von thermoplastischen aromatischen Polycarbonaten aus Bisphenolen, Kettenabbrechern und Kohlensäurebishalogeniden und gegebenenfalls Verzweigern unter den Reaktionsbedingungen des Phasengrenzflächenverfahrens oder des Verfahrens in homogener Phase, dadurch gekennzeichnet, daß man als Kettenabbrecher Verbindungen der Formel (II) des Anspruchs 1 in Mengen von 0,1 bis 25 Gew.-%, bezogen auf die Menge an eingesetzten Diphenolen, einsetzt, wobei maximal 98 Mol-% dieser einzusetzenden Kettenabbrecher durch andere Kettenabbrecher ersetzt sind.

**4.** Thermoplastische, aromatische Polycarbonate oder Gemische von thermoplastischen, aromatischen Polycarbonaten erhältlich nach dem Verfahren des Anspruch 3.

**5.** Thermoplastische, aromatische Polycarbonate mit $\overline{M}w$ (Gewichtsmittelmolekulargewichte, ermittelt durch Lichtstreuung oder Gelchromatographie in bekannter Weise nach vorheriger Eichung mit Polystyrol) von mindestens 10 000 der Formel (IX)

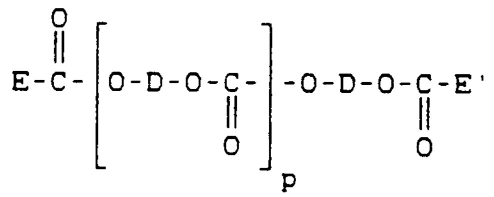

(IX),

worin -O-D-O- ein Diphenolat-Rest ist,
worin -D- ein zweibindiger Arylen-Rest mit 6 bis 50 C-Atomen ist, und
worin E- und E'- gleich oder verschieden sind und
wobei mindestens einer der Reste E- oder E'-einem Rest der Formel (IIa) entspricht,

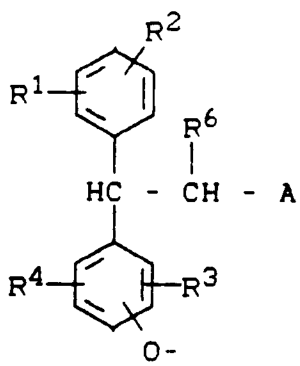

(IIa),

worin A, $R^1$, $R^2$, $R^3$, $R^4$ und $R^6$ die für Formel (II) in Anspruch 1 genannte Bedeutung haben,
und
wobei die übrigen Endgruppen E- und E'- aus der Reaktion mit anderen Kettenabbrechern, gegebenenfalls unter Einbeziehung von Kohlensäurebishalogeniden, resultieren,
und
worin "p" der Polymerisationsgrad ist, der aus den Molekulargewichten von mindestens 10.000 resultiert.

## Claims

**1.** Use of the polymers of the formula (II)

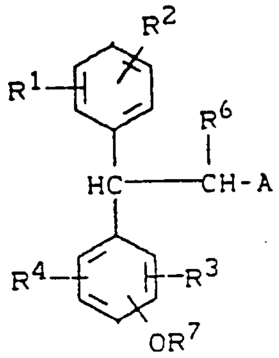

(II)

wherein

| | |
|---|---|
| A | means a polymer of anionically polymerisable vinyl compounds with an $\overline{M}n$ of 1,500 to 18,000 (measured by gel permeation chromatography), |
| $R^1$ and $R^2$ | mean H, $C_1$-$C_4$ alkyl or $CH_3$-O-, |
| $R^3$ | means H or $C_1$-$C_4$ alkyl, |
| $R^4$ | means H or $C_1$-$C_4$ alkyl, |
| $R^6$ | means H or $C_1$-$C_4$ alkyl and |
| $R^7$ | means H, as chain terminators for the production of thermoplastic, aromatic polycarbonates using the phase interface process or the process in homogeneous solution. |

**2.** Use of the polymers of the formula (II) according to claim 1 as chain terminators in combination with up to a maximum of 98 mol.%, related to the particular molar quantity of all chain terminators used, of other chain terminators for the production of thermoplastic, aromatic polycarbonates using the phase interface process or the process in homogeneous solution.

**3.** Process for the production of thermoplastic, aromatic polycarbonates from bisphenols, chain terminators and carbonic acid bishalides and optionally branching agents, under the reaction conditions of the phase interface process or the process in homogeneous solution, characterised in that compounds of the formula (II) of claim 1 are used as chain terminators in quantities of 0.1 to 25 wt.%, related to the quantity of diphenols used, wherein a maximum of 98 mol.% of these chain terminators to be used are replaced by other chain terminators.

**4.** Thermoplastic, aromatic polycarbonates or blends of thermoplastic, aromatic polycarbonates obtainable using the process of claim 3.

**5.** Thermoplastic, aromatic polycarbonates with $\overline{M}w$ (weight average molecular weights, determined in a known manner by light scattering or gel chromatography after prior calibration with polystyrene) of at least 10,000 of the formula (IX)

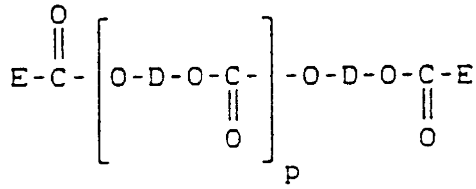

(IX),

in which -O-D-O- is a diphenolate residue,
in which -D- is a divalent arylene residue with 6 to 50 C atoms and

in which E- and E'- are the same or different and wherein at least one of the residues E- or E'- corresponds to a residue of the formula (IIa),

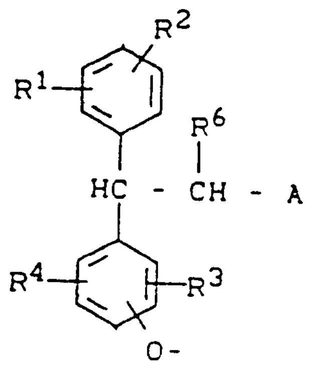

(IIa),

in which A, $R^1$, $R^2$, $R^3$, $R^4$ and $R^6$ have the meaning stated for formula (II) in claim 1,
and
wherein the remaining terminal groups E- and E'-result from reaction with other chain terminators, optionally including carbonic acid bishalides,
and
in which "p" is the degree of polymerisation resulting from the molecular weights of at least 10,000.

## Revendications

**1.** Utilisation des polymères de formule (II)

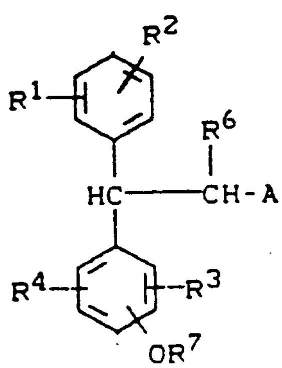

(II)

dans laquelle

| | |
|---|---|
| A | représente un polymère de composés vinyliques polymérisables par voie anionique, ayant une $M_n$ de 1 500 à 18 000 (valeur mesurée à l'aide d'une chromatographie de perméation de gel), |
| $R^1$ et $R^2$ | représentent chacun H, un groupe alkyle en $C_1$-$C_4$ ou $CH_3$-O-, |
| $R^3$ | représente H ou un groupe alkyle en $C_1$-$C_4$, |
| $R^4$ | représente H ou un groupe alkyle en $C_1$-$C_4$, |
| $R^6$ | représente H ou un groupe alkyle en $C_1$-$C_4$, et |
| $R^7$ | représente H, comme agent de rupture de chaîne pour la production de polycarbonates aromatiques thermoplastiques, (que l'on obtient) selon le procédé opérant en surface limite de phase ou selon le procédé en solution homogène. |

**2.** Utilisation des polymères de formule (II) selon la revendication 1 comme agent de rupture des chaînes, en combinaison avec au maximum 98 mol%, par rapport à la quantité molaire à chaque fois de tous les agents de rupture de chaîne que l'on utilise, d'autres agents de rupture de chaîne pour produire des polycarbonates aromatiques thermoplastiques (que l'on obtient) par le procédé opérant en surface

limite des phases ou selon le procédé en phase homogène.

**3.** Procédé pour produire des polycarbonates aromatiques thermoplastiques à partir de bisphénols, d'agents de rupture de chaîne et de bishalogénures de l'acide carbonique, et éventuellement des agents de ramification dans des conditions de réaction du procédé opérant en surface limite des phases ou du procédé en phase homogène, procédé caractérisé en ce qu'on utilise comme agent de rupture de chaîne des composés de formule (II) de la revendication 1, en des quantités de 0,1 0 25 % en poids par rapport à la quantité des diphénols mis en oeuvre, une proportion maximale de 98 % de ces agents à utiliser comme agents de rupture de chaîne étant remplacés par d'autres agents de rupture de chaîne.

**4.** Polycarbonates aromatiques thermoplastiques ou mélanges de polycarbonates aromatiques thermoplastiques que l'on peut obtenir selon le procédé de la revendication 3.

**5.** Polycarbonates aromatiques thermoplastiques, comportant des $M_p$ (poids moléculaire moyen en poids, déterminés par dispersion de la lumière ou chromatographie sur gel, de façon connue après étalonnage préalable à l'aide de polystyrène) valant au moins 10 000, de formule (IX)

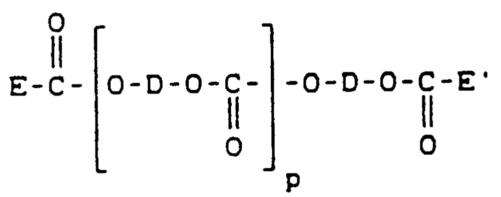

(IX),

dans laquelle -O-D-O- représente un reste diphénolate,
-D- représente un reste arylène divalent comportant 6 à 50 atomes de carbone, et
E- et E'- sont identiques ou différents et au moins l'un des restes E- ou E'-correspond à un reste de formule (IIa)

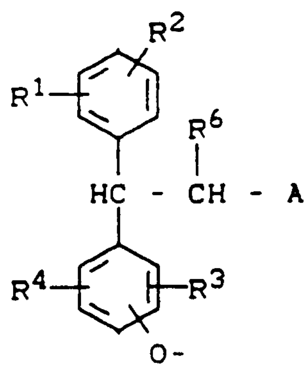

(IIa),

dans laquelle A, $R^1$, $R^2$, $R^3$, $R^4$ et $R^6$ ont le sens indiqué pour la formule (II) à la revendication 1, et
les autres groupes terminaux E- et E'- résultent de la réaction avec d'autres agents de rupture de chaîne, éventuellement avec mise en oeuvre de bishalogénure de l'acide carbonique, et
"p" indique le degré de polymérisation, qui résulte des poids moléculaires valant au moins 10 000.